# EUROPEAN PATENT SPECIFICATION

(11) **EP 3 705 719 B1**
(45) Date of publication and mention of the grant of the patent: **29.06.2022**
(21) Application number: 19160707.6
(22) Date of filing: 05.03.2019
(51) Int. Cl.: F03D 13/25, F03D 7/02

(54) **DESIGNING TOWERS OF OFFSHORE WIND TURBINES**
ENTWURF VON TÜRMEN VON OFFSHORE-WINDTURBINEN
CONCEPTION DE TOURS D'ÉOLIENNES EN MER

(43) Date of publication of application: 09.09.2020
(73) Proprietor: Vestas Wind Systems A/S, 8200 Aarhus N (DK)
(72) Inventor: DALSGAARD, Søren, 8370 Hadsten (DK); BØTTCHER, Peter, 8250 Egå (DK); YDE, Anders, 8000 Århus C (DK); NETO, Julio Xavier Vianna, 8200 Aarhus N (DK); PERICLEOUS, Alex, Surrey, KT19 9UG (GB)
(74) Representative: Vestas Patents Department

(56) References cited:
- EP-A1- 3 324 043
- EP-A2- 2 469 083
- JP-A- 2005 240 785

## Description

### FIELD OF THE INVENTION

The invention relates to offshore wind turbines, particularly to methods for designing structures of the wind turbine with respect to wave impacts, and particularly to designing the tower of offshore wind turbines.

### BACKGROUND OF THE INVENTION

Offshore wind turbines are exposed to high fatigue loads caused by waves hitting the support structure such as the tower. For example, wave frequencies corresponding to the two lowest structural eigenmodes such as the first fore-aft and side-side bending modes may cause fatigue loads at a level which may render a wind turbine project infeasible due to costs of the support structure. The problem with fatigue loads may be addressed by designing a support structure with an eigenfrequency so that waves do not excite resonant oscillations or so resonant oscillations are infrequently excited. However, for large support structures, the required increase of the stiffness for increasing eigenfrequencies can be very expensive. Accordingly, since offshore wind turbines tend to increase in size, the problem is increasing. Thus, there is a need for a design of support structures for offshore wind turbines which is able to withstand impacts from waves and which is economically feasible. Document JP2005240785 discloses a method for structurally designing an offshore wind turbine.

### SUMMARY OF THE INVENTION

It is an object of the invention to improve design of tower and support structures of offshore wind turbines, particularly to reduce fatigue loading due to waves and other impacts of the sea and to reduce production costs of offshore wind turbines. This is particularly relevant for large support structures.

In a first aspect of the invention there is provided a method for structurally designing an offshore wind turbine, the method comprises:
- obtaining hydrodynamic data associated with a location of the offshore wind turbine, where the hydrodynamic data comprises wave height related values and/or wave frequencies and probability of occurrence data indicating the probability of waves with the wave height related values and/or wave frequencies,
- determining a significant wave frequency based on the hydrodynamic data and on basis of a wave frequency where the wave height related value associated with the wave frequency has a potential or estimated significant impact on fatigue loading of a tower and/or a support structure of the wind turbine,
- determining dominant eigenfrequencies of the wind turbine, and
- adjusting structural design parameters of the wind turbine so that at least one of the dominant eigenfrequencies is located below the significant wave frequency.

The hydrodynamic data may comprise wave height related values and associated wave frequencies. Alternatively, the hydrodynamic data may comprise either wave height related values or wave frequencies, in which case the wave height related values or the wave frequencies which is not comprised by the hydrodynamic data is estimate from the other, e.g. using a wave model.

The significant wave frequency is the wave frequency which has a significant impact on the operational performance of the wind turbine. The significant wave frequency may be the wave frequency having the highest probability of occurrence, the wave frequency which generates the highest fatigue load taking the probability of occurrence data into account or the wave frequency which cause other significant potential or estimated impacts on the lifetime or operational performance such as the frequency of operational faults, down-time and other.

The significant wave frequency may be determined based on a combination of wave frequency and wave height or wave energy. For example, the significant wave frequency may be determined as the wave frequency of wave having a high energy or high accumulated energy over a period taking the probability of occurrence data into account.

The significant wave frequency may be determined based on a wave frequency where the associated wave height has a potential or estimated significant or maximal impact on fatigue loading of the tower. The potential significant impact can be determined based on the wave heights and their probabilities, but without consideration of the structural properties of the wind turbine. Alternatively or additionally, the estimated significant impact can be determined based on the wave heights and their probabilities, but with consideration of the structural properties of the wind turbine, e.g. were the eigenfrequencies of the tower or other component is taken into account.

The waves generates loads on the tower and consequently the support structure which fixes the tower to the seabed. The constant wave loads causes a fatigue loading on the tower and likely also on the support structure. Accordingly, the significant wave frequency can be determined based on the potential or estimated significant impact on fatigue loading of a tower and/or the support structure.

The dominant eigenfrequencies of the wind turbine depends on design parameters of the system of the wind turbine and seabed foundation. Thus, the dominant eigenfrequencies can be determined based on properties like structural parameters (e.g. stiffnesses and masses) and material properties of one or more of the tower, the nacelle, the rotor, the tower monopole and the seabed foundation.

Advantageously, by locating the dominant eigenfrequency below the significant wave frequency, excitation of resonant oscillations due to that oscillation is avoided or at least significantly reduced. Waves at the significant wave frequency may still excite oscillating loads, but not resonant oscillations. Accordingly, fatigue loading at the significant wave frequency is reduced. Resonant oscillations may still be excited at the dominant eigenfrequency by waves having a corresponding frequency. However, since such low-frequency and high amplitude waves occur with a low probability, i.e. the wind turbine is normally only exposed such waves very infrequently, the fatigue loading due to such waves is low.

The adjustment of the structural design parameters of the wind turbine may involve design parameters of the tower and/or the seabed foundation design, i.e. so that the first mode coupled tower-foundation frequency is adjusted to a desired target.

Although, the dominant eigenfrequencies may be eigenfrequencies of the tower, they can also be eigenfrequencies of other components of the wind turbine such as eigenfrequencies of the blades or other support components, such as support components of support arms of multirotor offshore wind turbines. However, since it is the tower that receives the wave loads, at least the design parameters of the tower is adjusted in order to achieve the desired placement of the dominant eigenfrequencies with respect to the significant wave frequency.

For example, eigenmode analysis of the wind turbine results vibration modes of the wind turbine. The result would normally show deflections in several components in one single vibration mode. For example, in the first tower fore-aft bending mode, major deflections in blade's flapwise direction could be observed in the analysis result. In a multirotor configuration, the first tower fore-aft bending mode may also comprise deflections of the multirotor support arms. A design with an increased stiffness of the arms or blades could result in a change of the frequency of the first fore-aft mode. However, the frequency of this mode may be more affected by adjusting the tower stiffness. Thus, an adjustment of the structural design parameters normally involves adjustment of the design parameter such as stiffness of the tower, but could additionally or alternatively involve adjustment of design parameters of other components like stiffness of the support arms of multirotor wind turbines or blades.

In an example, the most dominant eigenfrequency is the lowest eigenmode frequency which overlaps a sub-critical wave frequency range, i.e. a wave frequency range located below the significant wave frequency.

The dominant eigenfrequency may be the dominant eigenfrequency of the tower or tower-foundation structure. Thus, the method for structurally designing the offshore wind turbine may be a method for structurally designing the tower or tower-foundation structure of the wind turbine.

In an example, the hydrodynamic data associated with the location of the offshore wind turbine additionally comprises wave height related values associated with the wave frequencies, and the probability of occurrence data indicates the probability of waves with the wave height related values and associated wave frequencies.

According to an embodiment, the method comprises obtaining a probability distribution function based on the hydrodynamic data, wherein the probability distribution function gives the probability of occurrence of wave frequencies, and wherein the probability distribution function defines the significant wave frequency as the wave frequency with the highest probability.

According to an embodiment, the at least one dominant eigenfrequency is associated with a structural eigenmode which is susceptible of resonant excitation due to waves with wave frequencies in a sub-critical and/or a super-critical frequency range, where the sub-critical wave frequency range comprises wave frequencies below the significant wave frequency and the super-critical wave frequency range comprises wave frequencies above the significant wave frequency.

Examples of dominant eigenfrequencies comprise dominant 1st order bending modes of the tower. Due to the mass of the nacelle, fore-aft and side-side bending modes may have different, but possibly close, eigenfrequencies. One or both of these eigenfrequencies may need to be considered in the design and adjustment of the parameters of the tower. Additionally or alternatively, other dominant eigenfrequencies such as eigenfrequencies of blades and other support structures like support arms of multirotor support structures, which may be located in the sub-critical and/or a super-critical frequency range, may be adjusted for locating them below the significant wave frequency. Other dominant eigenfrequencies may be the second tower bending modes in the side-side and/or fore-aft direction.

Thus, the dominant eigenfrequency could be placed in the sub-critical range, contrary to normal principles, and even though low probability waves could excite resonant oscillation of the tower.

According to an embodiment, the dominant eigenfrequencies comprise at least first order eigenfrequencies, e.g. eigenfrequencies of first order modes of the wind turbine or tower. Advantageously, by placing first order eigenfrequencies such as the lowest eigenfrequency of the wind turbine such as the first order eigenfrequency of the tower or tower-foundation structure below the significant wave frequency, resonant excitation of the first order eigenmode is limited to low frequent waves while the wind turbine can be designed economically with relative low stiffness components.

According to an embodiment the structural design parameters are adjusted so that the at least one of the dominant eigenfrequencies is additionally located below a 1P frequency range of the wind turbine. Advantageously, by placing the dominant eigenfrequency below the 1P range, 1P excitations due to the rotor frequency is avoided or reduced.

According to an embodiment, the adjustment of the design parameters is performed subject to one or more constraints defining a frequency range constraint wherein location of eigenfrequencies are not allowed and/or defining a structural constraint.

According to an embodiment, the method comprises estimating a fatigue load of the tower based on the structural design parameters and the hydrodynamic data, wherein the adjustment of the structural design parameters is performed based on the fatigue load and subject to a maximum fatigue load of the tower and/or subject to minimizing the fatigue load.

According to an embodiment, the method comprises determining extreme loading due to low-probability waves having associated wave frequencies below the significant wave frequency in order to determine if the extreme loading due to the low-probability waves is acceptable. Advantageously, this check improves the certainty that low-probability waves could not case fatal damage.

According to an embodiment the adjustment of the design parameters is performed so that eigenfrequencies of second order modes of the tower are located above the significant wave frequency. Advantageously, by placing second order modes of the tower and/or other components above the significant wave frequency, resonant excitation of such second order modes with high energy waves is avoided are reduced.

A second aspect of the invention relates to an offshore wind turbine comprising a tower, a support structure for fixing the tower to a seabed and a nacelle comprising a rotor with two or more blades, wherein the wind turbine has at least one dominant eigenfrequency located below a significant wave frequency, wherein:
- the significant wave frequency has been determined from hydrodynamic data associated with a location of the offshore wind turbine, where the hydrodynamic data comprises wave height related values (Hi) and/or wave frequencies (fi) and probability of occurrence data indicating the probability of waves with the wave height related values (Hi) and/or wave frequencies (fi),
- the wave height related value associated with the significant wave frequency has a potential or estimated significant impact on fatigue loading of the tower and/or the support structure, and
- where structural design parameters of the wind turbine have been determined so that the at least one dominant eigenfrequency is located below the significant wave frequency (fc).

According to an embodiment the offshore wind turbine has been designed according to the method of the first aspect.

According to an embodiment, the tower or extensions thereof extends to the seabed and is fixed to the seabed via the support structure, e.g. a monopile structure.

According to an embodiment, the offshore wind turbine is a multi-rotor wind turbine comprising a plurality of the nacelles mounted to respective support arms extending from the tower.

According to an embodiment the at least one first order eigenfrequency of the offshore wind turbine is located below 0.15 Hz.

In general, the various aspects and embodiments of the invention may be combined and coupled in any way possible within the scope of the invention as defined by the appended claims. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows an offshore wind turbine,
Fig. 2A illustrates relationships between wind speed and wave heights,
Fig. 2B illustrates an almost linear relationship between wave height and wave period,
Fig. 3 illustrates probability distributions of the wave heights for different wind speeds,
Fig. 4 principally illustrates a table of experimentally obtained hydrodynamic wave data,
Fig. 5 shows a probability distribution function for the probability of occurrence of waves with wave frequencies f,
Fig. 6 shows the probability distribution of wave frequencies and 1P and 3P frequency ranges of the wind turbine,
Fig. 7A-B show examples of multi-rotor wind turbines, and
Figs. 8A-D show wave related distributions for a given site or range of sites.

### DETAILED DESCRIPTION OF EMBODIMENTS

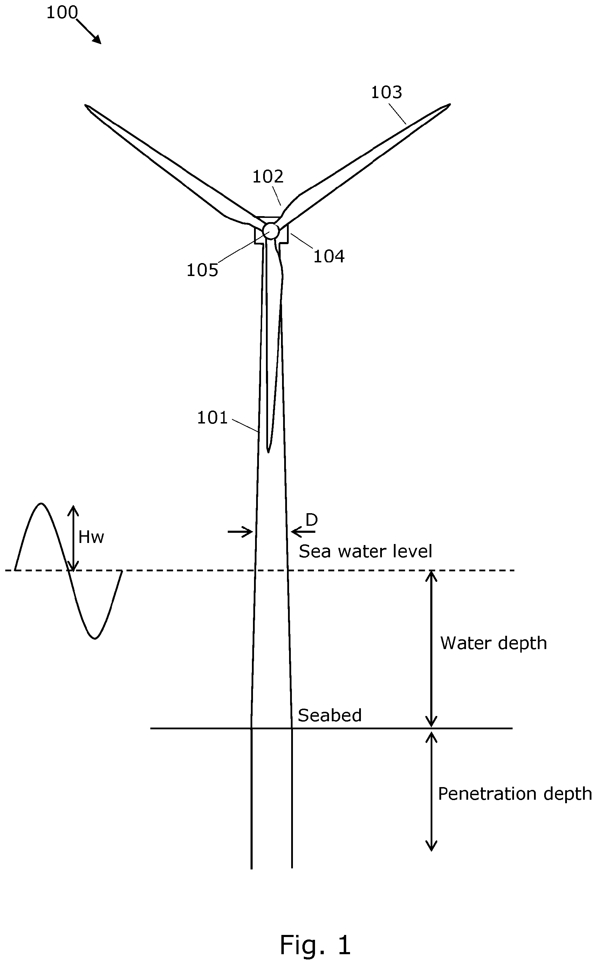

Fig. 1 shows an offshore wind turbine 100 comprising a tower 101 and a rotor 102 with at least one rotor blade 103, such as three blades. The blades 103 are connected with the hub 105 which is arranged to rotate with the blades. The rotor is connected to a nacelle 104 which is mounted on top of the tower 101 and being adapted to drive a generator situated inside the nacelle via a drive train. The rotor 102 is rotatable by action of the wind. The wind induced rotational energy of the rotor blades 103 is transferred via a shaft to the generator. Thus, the wind turbine 100 is capable of converting kinetic energy of the wind into mechanical energy by means of the rotor blades and, subsequently, into electric power by means of the generator. The electric power produced by the generator, possibly converted to a suitable voltage and frequency via a power converter, is supplied to a power transmission cable which transmits the power, e.g. to a land based power station for further injection of the power to a utility grid.

The location of the wind turbine installation has a given water depth given as the distance between the sea water level and the seabed. The tower or extensions thereof extends to the seabed and penetrates the seabed down to a given penetration depth.

The portion of the tower which extends through the water or a portion of the water and the seabed may be constituted by a foundation pile. The foundation pile and the upper portion of the tower which extends up to the nacelle 140 may be connected by a transition piece.

The wind turbine 100 may be fixed to the seabed by the foundation pile, e.g. the monopile shown in Fig. 1 or other support structures such as three-legged foundation piles, lattice structures or other structures.

Herein it is understood that the tower 101 may comprise the entire structure extending from the lowest support portion in the seabed to the highest portion interfacing the nacelle 104, although the tower 101 may be constituted by e.g. a foundation pile and the upper tower.

The tower has a diameter D which generally increases, e.g. linearly, from the top of the tower towards the bottom of the tower. The lower portion of the tower of foundation pile may have a constant diameter.

The tower 101 is exposed to hydrodynamic loads due to the wave hitting the tower and water current. The loading due to waves depend on the wave height Hw, principally illustrated, and the wave frequency f. Wave frequency fw is given as 1/Tw where Tw is the time period of a sinusoidal wave.

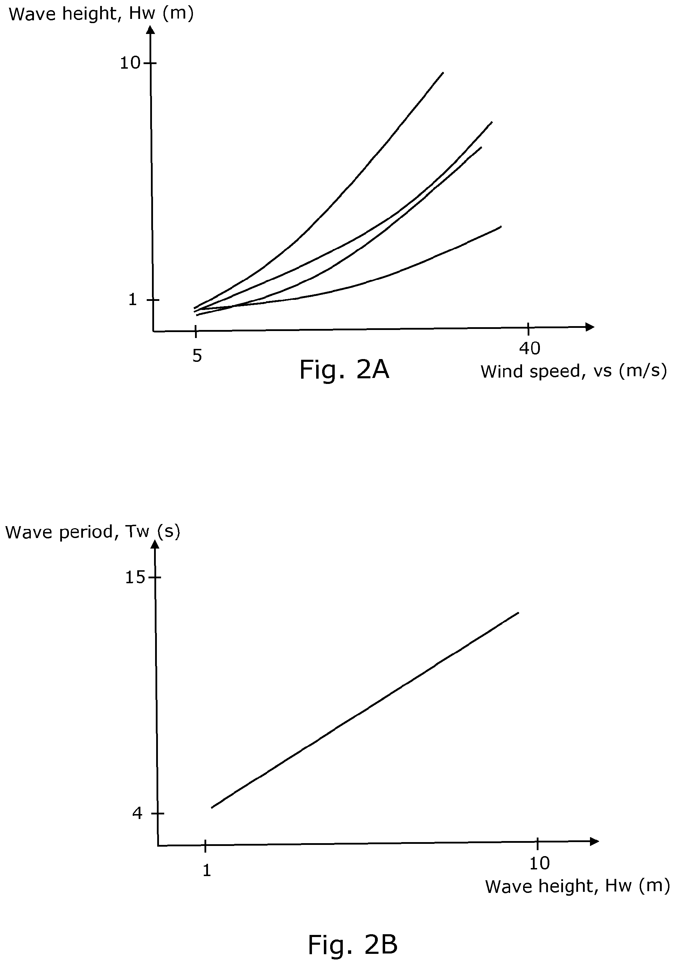

Fig. 2A illustrates examples of relationships between wind speed vs and wave heights Hw. The different curves corresponds to wave height measurements obtained at different locations. Even though the relationship depends on the location, the relationships show similar behavior.

Fig. 2B illustrates that the relationship between the wave heights Hw and wave period Tw is approximately linear. Thus, the wave period Tw increases, alternatively the wave frequency fw decreases, for increasing wave height Hw. Again, different curves for the Hw-Tw relationships would be obtained from measurements at different locations.

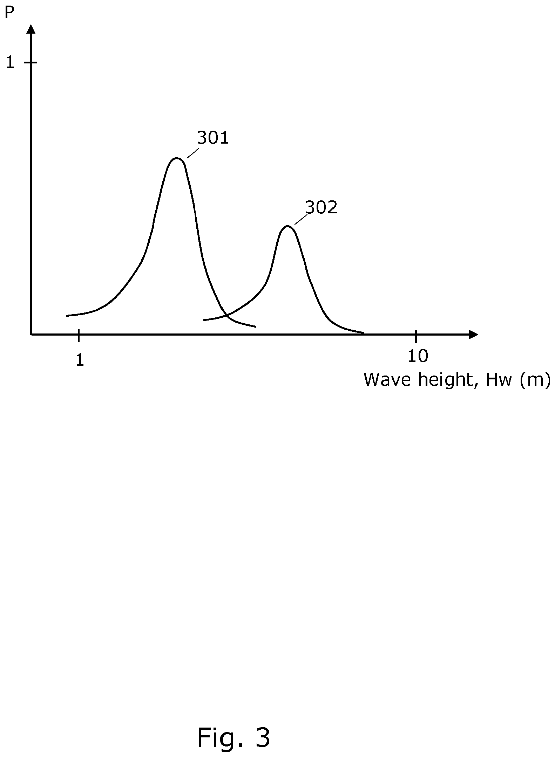

Fig. 3 illustrates examples of probability distributions P of the wave heights Hw for wind speeds corresponding to the rated wind speed of the wind turbine in curve 301 and for wind speed corresponding to the cut out wind speed in curve 302. The rated wind speed corresponds to the wind speed where the nominal power production is achieved, the cut out wind speed corresponds to the wind speed where the wind turbine is shut down due to high wind speed.

Curve 301 shows that the wind turbine may be exposed to high wave heights Hw, but with low occurrences over a year. The higher cut out wind speeds occurs less frequent over a period, e.g. a year. Accordingly, the most frequent wave height in curve 302 has a lower probability than the most frequent wave height in curve 301.

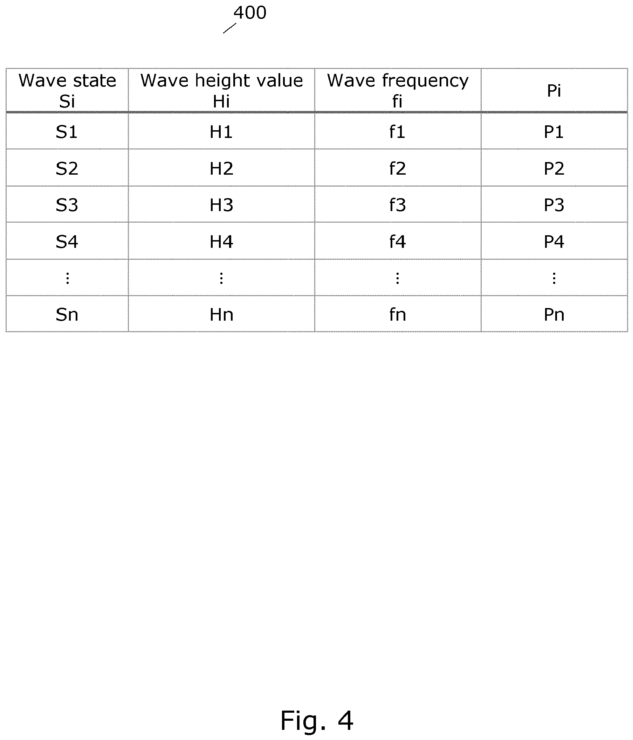

Fig. 4 principally illustrates a table of experimentally obtained hydrodynamic wave data 400 for a specific location at sea where the offshore wind turbines may be installed. The hydrodynamic wave data comprises a number of wave states Si, S1-Sn where each state comprises wave height related values Hi, associated wave frequencies fi and probability of occurrence data Pi indicating the probability of waves with the wave height related values Hi and associated wave frequencies fi.

The wave states Si may be selected so that the sum of probabilities sum up to a percentage close to 100 %. Thus, a few wave states with low probabilities may be ignored since they will not contribute with significant load fatigue.

The wave height related values Hi may be wave heights Hw as indicated in Fig. 1, or other values which are determined on basis of wave heights Hw, which corresponds to wave height Hw or values which enables determination of the load impact on the tower 101. For example, the wave height related values Hi may be wave energy values which describe the energy of the waves or other energy values from which the wave load on the tower 101 can be determined.

It may be sufficient to obtain only the wave height related values Hi or the wave frequencies fi since either the wave height related values Hi or the wave frequencies fi may be determined or estimated from the other via the relationship between wave heights Hw and wave periods Tw in Fig. 2B.

The hydrodynamic data may be used for determining a significant wave frequency fc. The significant wave frequency fc may be determined as the wave frequency fi having the highest probability of occurrence. For example, from the hydrodynamic wave data in Fig. 4, fi=0.15Hz is the frequency having the highest probability of occurrence so that fc becomes 0.15Hz.

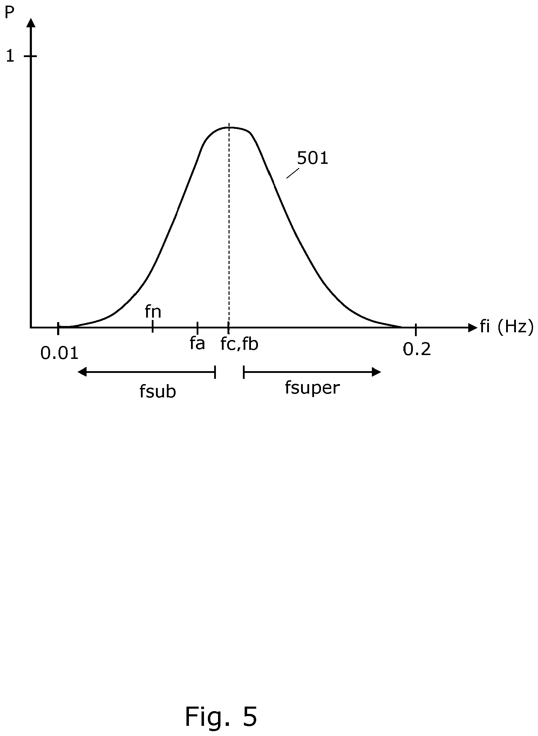

Fig. 5 shows a probability distribution function 501 for the probability of occurrence of wave frequencies fi which have been obtained on basis of the wave frequencies fi and associated probabilities Pi, e.g. on basis of data as shown in Fig. 4. The probability distribution function 501 defines the significant wave frequency fc as the wave frequency with the highest probability, a sub-critical wave frequency range fsub of wave frequencies f below the significant wave frequency fc and a super-critical wave frequency range fsuper of wave frequencies f above the significant wave frequency fc.

The significant wave frequency fc can be determined in different ways based on the hydrodynamic data, i.e. in other ways than determining fc as the wave frequency with the highest occurrence. For example, the significant wave frequency fc can be determined as the wave frequency of the wave height related value Hi which has potential maximal or significant impact on fatigue loading of the tower, i.e. where a potentially significant impact is determined solely based on wave properties, but without considering e.g. the eigenfrequencies of the wind turbine.

In another example, the significant wave frequency fc can be determined as the wave frequency of the wave height related value Hi which has an estimated maximal or significant impact on fatigue loading of the tower, i.e. where the estimated significant impact is determined based on wave properties together with the actual design parameters of the wind turbine, such as the eigenfrequencies of the wind turbine. Thus, the estimated maximal or significant impact on fatigue loading of the tower corresponds to the actually fatigue loading of the tower which is predicted based on simulations, i.e. estimated.

For example, a wave frequency fa may deviate (may e.g. be smaller) then the most frequently occurring wave frequency fb, but the wave heights associated with fa has an estimated higher fatigue load impact than the wave heights associated with fb. For example, fa may be smaller than fb, but the lager wave heights associated with fa may be shown to generate a higher fatigue load (e.g. via fatigue load simulations) in spite of a lower probability of occurrence of fa than fb.

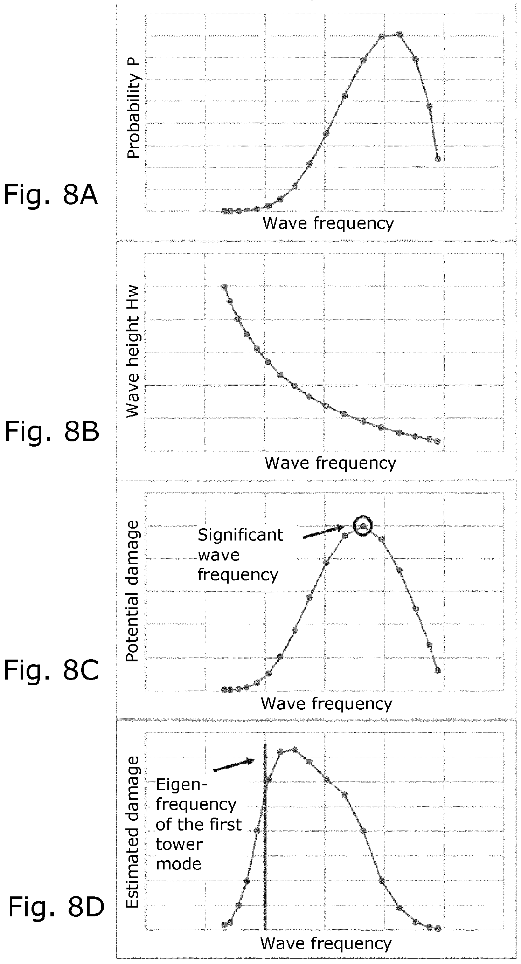

Figs. 8A-D show wave related distributions for a given site or range of sites. Fig. 8A shows the probability distribution P as a function of wave frequency for a given site. The significant wave frequency could be defined as the wave frequency having highest probability of occurrence based on the probability distribution in Fig. 8A. However, this may not provide the most significant wave frequency with respect to fatigue loads since wave height Hw also has an impact of the loads. Fig. 8B shows the wave heights Hw as a function of wave frequency. Fig. 8C shows a combination of the probability distribution of Fig. 8A and the wave height curve of Fig. 8B.

The distribution of Fig. 8C gives the potential damage or the potential impact on fatigue loading of the tower of the wind turbine. The curve in Fig. 8C has been shifted to in the direction of lower wave frequencies compared to Fig. 8A. The curve in Fig. 8C may determined as the amount of excitation coming from the waves at different frequencies through the lifetime of the wind turbine. The curve in Fig. 8C represents the potential fatigue loading, because the actual fatigue loading will also depend on the frequency response of the wind turbine structure. On basis of the curve in Fig. 8C, the significant wave frequency can be determined as the wave frequency of the peak potential damage.

Fig. 8D shows the curve of Fig. 8C which has been modified by taking the frequency response of the wind turbine structure into account. The frequency response includes the eigenfrequency of the first tower mode as illustrated by the vertical line. The curve in Fig. 8C represents the actual impact on fatigue loading as estimated, i.e. the estimated fatigue loading. The peak damage values of the estimated damage is shifted further in the direction of lower wave frequencies due to the location of the resonance peak below the peak frequency in Fig. 8C. If the resonance peak was located above the peak frequency in Fig. 8C, the peak frequency in Fig. 8D would have been shifted to the right.

Thus, the determination of the significant frequency could be determined as the peak wave frequency of Fig. 8C which represents a potential significant impact on fatigue loading, or as the peak wave frequency of Fig. 8D which represents the actual or estimated significant impact on the fatigue loading.

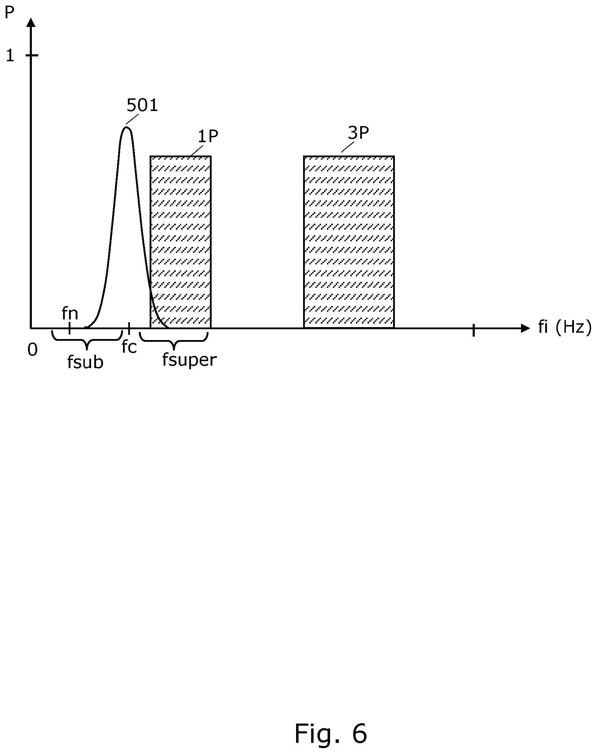

Fig. 6 shows the probability distribution 501. Instead of the probability distribution 501, the wave frequencies could be represented by other distributions e.g. the wave height related values Hi or wave energy as a function of wave frequency fi.

The rotation frequency of the rotor 102 can excite resonant oscillation of the tower 101 or other components of the wind turbine 100. The range of frequencies f corresponding to the possible rotation frequencies of the rotor is indicated by the 1P range. Passage of the rotor blades 103 at the tower 101, for a three-blade rotor 102, generate tower loads at a frequency which is three times the rotation frequency. The frequency range of these loads is indicated by the 3P range.

Accordingly, the components of the wind turbine, particularly the tower, are normally designed so that dominant eigenfrequencies like the 1st order eigenfrequency of the tower is not contained within the 1P and 3P ranges as well as other frequency ranges wherein location of eigenfrequencies are not allowed.

Due to the harmonic load effects of the waves, dominant eigenfrequencies of the tower should also not be located near the significant wave frequency fc.

A solution would be a design of the wind turbine and tower 101 where the dominant eigenfrequencies, e.g. 1st order frequency of the tower is placed in the allowed interval between the 1P and 3P range.

However, increasing rotor diameters of wind turbines necessitates longer towers. In addition, desires to placement of offshore wind turbines on greater sea depths implies longer towers. As the length of the tower increases, the eigenfrequencies of the tower decreases, i.e. towards the high damaging wave frequency range or the significant wave frequency fc . In order to shift the dominating eigenfrequencies away from the significant wave frequency fc or other damaging wave frequency range, the stiffness of the tower needs to be increased, e.g. by increasing the diameter D of the tower or the wall thickness of the tower. The increased amount of steel needed for increasing the stiffness increases the cost and the environmental footprint of the wind turbine.

As an alternative, one or more of the dominating eigenfrequencies of the tower or other large structures of the wind turbine, e.g. the 1st order eigenfrequency of the tower, can be shifted below the 1P range. However, this could increase the generation of wave induced load fatigue due to wave frequencies, e.g. according to probability distribution 501. That is, the probability distribution 501 may overlap the 1P range so that the wave frequencies fi which are located above fc and which has a relative high probability of occurrence are located close to or within the lover frequency range of the 1P range.

By placing the at least one dominating eigenfrequency fn below the significant wave frequency fc and sufficiently far from the significant wave frequency fc, wave induced excitation is reduced.

As illustrated, the dominating eigenfrequency fn could be placed substantially outside the probability distribution 501 which would substantially eliminate resonant wave induced oscillations of the tower 101. However, in this case the stiffness of the wind turbine component could be decreased so much that non-resonant oscillations or deflections of the tower become critical.

The dominating eigenfrequency fn could also be placed within the distribution 501 of probable wave frequencies, but below fc as shown in Fig. 5. Placement of the eigenfrequency within the distribution 501 implies that the tower will be exposed to waves with relatively high wave heights Hw, but with a relatively low occurrence during a period, e.g. a year. Even though the waves generate a high resonant excitation of the tower during the time when the wave frequency f is close to the design frequency fn, the duration of resonant excitation during e.g. a year is low so that the effect on fatigue loading may not be significant compared to other loads.

Even though solutions addresses structural design of the tower 101, it is noted that eigenfrequencies of other components such as supporting structures other than the tower 101 or blades 102, could be resonantly excited by wave loads via the tower and possibly could couple with the tower to start a coupled oscillation. Thus, even though the placement of eigenfrequencies of the tower is essential, placement of eigenfrequencies of other components relative to the wave frequencies may also be important to consider.

In order to design the tower, the dominant eigenfrequencies fn of the tower and possibly other components is determined, i.e. based on the design parameters of the tower such as the diameter D, wall thickness and steel types. The eigenfrequencies are compared with the significant wave frequency fc and dependent on the difference between fc and fn, the structural design parameters of the tower is adjusted so that at least one of the dominant eigenfrequencies is located below the significant wave frequency fc. The adjustment may include a process where the eigenfrequencies are determined and the adjustment is performed iteratively.

For example, the first order eigenfrequency fn may be placed a factor two below the significant wave frequency.

Depending on the design of the wind turbine, instead of, or in addition to, adjusting the structural design parameters of the tower, structural design parameters of other component of the wind turbine may be adjusted.

The determination of the dominant eigenfrequencies of the wind turbine may be determined by determining the frequency response of the entire system comprising the wind turbine, possibly the seabed support structure and possibly material properties of the seedbed such as damping properties. Since different components of the wind turbine may have an effect on the frequency response of other components, determination of dominant eigenfrequencies of individual wind turbine components in isolation from the entire system may not provide sufficiently accurate determinations of the dominant eigenfrequencies. In a possible solution, if an adjustment of the structural design parameters of the wind turbine is required in order to lower one of the dominant eigenfrequencies of interest, the structural design parameter of the component of which the eigenmode is associated is adjusted to achieve the desired change of the dominant eigenfrequency. For example, if the dominant eigenfrequency is an eigenfrequency of the tower, the diameter of the tower could be changed.

The adjustment of the design parameters is performed subject to one or more constraints. For example, a constraint may define a frequency range constraint wherein location of eigenfrequencies are not allowed. Such frequency range constraints may include the 1P and 3P ranges and/or a frequency range derived from the hydrodynamic data, the probability distribution 501 or other related wave data. For example a frequency range from 0.12-0.18 Hz which comprises the significant wave frequency fc may constitute a frequency range constraint.

Other constraints may include structural constraints, such as constraints on minimum and/or maximal values of diameter D and/or wall thickness of the tower, the maximal weight of the tower, the minimum value of higher order eigenfrequencies such as the 2nd mode eigenfrequency of the tower and other.

The design of the tower or other component of the wind turbine may be performed by determining the fatigue load of the tower based on the presently determined structural design parameters and the hydrodynamic data. For example, the fatigue load may be determined iteratively based on different wave states Si, different wave frequencies and associated wave heights or other hydrodynamic data and different structural design parameters. If the resulting fatigue load is too high, e.g. higher than a determined maximum fatigue other design parameters are chosen. Alternatively, the design could be performed as an optimization where the design parameters are determined based on different wave states Si subject to minimizing the fatigue load.

Additionally or alternatively, the design may involve other design criteria. For example, an objective may be to adjust the structural design parameters so that at least one of the dominant eigenfrequencies is located within a certain frequency range or below a maximum frequency, e.g. below or at a frequency in the probability distribution function 501 where the probability of occurrence is less than 70 percent of the maximum probability.

The fatigue load and/or the extreme load could be calculated based on determining tower displacements at the sea water level (see Fig. 1) based on the design parameters and the hydrodynamic data. The adjustment of the design parameters is performed based on the determined tower loading and subject to a maximum tower load and/or subject to minimizing the tower loading.

Higher order eigenfrequencies such as 2nd order eigenfrequencies, i.e. eigenfrequencies of second order modes, may also need to be placed outside constrained frequency ranges such as the 1P and 3P ranges as well as a frequency range which comprises the significant wave frequency fc. Thus, the adjustment of the design parameters may be performed subject to constraints on the placement of eigenfrequencies of higher frequencies than e.g. the first order eigenfrequency of the tower. For example, the tower may be designed subject to a further constraint requiring that eigenfrequencies of second order modes of the tower is located above the significant wave frequency fc, e.g. above the 1P or 3P range.

Herein, the first order eigenfrequency is understood as the eigenfrequency of a first mode, the second order eigenfrequency is understood as the eigenfrequency of a second mode, etc. For example, the first order eigenfrequency of tower is the eigenfrequency of the first mode of the tower, or the first coupled mode of the tower and foundation since the seabed foundation affects the eigenmodes.

When a design has been generated, a further check on fatigue loads may be performed. For example, the resulting fatigue load due to waves having wave frequencies near the eigenfrequency fn, e.g. over a year, can be determined based on the associated probabilities Pi and wave heights Hi. The determined fatigue loads due to the low-probability waves may be compared with a threshold fatigue level to determine if the adjusted design parameters are acceptable. If not, the design may be adjusted further, e.g. in order to decrease the tower stiffness and thereby the eigenfrequencies.

In order to ensure that extreme loads in an adjusted tower design due to low-probability waves having associated wave frequencies fi below the significant wave frequency fc does not cause a too high instantaneous load, a check may be performed, e.g. after the eigenfrequency fn has finally been placed or iteratively with the sequential adjustment of the design parameters, to ensure that low-probability waves would not cause fatal damage. An extreme load is an instantaneous load caused e.g. by resonant tower oscillations which could lead to an instantaneous collapse of the tower or other component of the wind turbine.

Thus, when a candidate for the structural design has been achieved, a check may be performed to ensure that low-probability waves, i.e. waves with high wave heights Hw does not case fatal damages in case the low-probability event actually occurs during the expected life. For example, the initial design may provide a design of the tower where the first order eigenfrequency coincides with the with wave frequencies occurring at 24 m/s, but where the resulting fatigue load is low enough due to the low probability of the 24 m/s wind speeds. However, a check of the extreme load that could be generated due to resonant tower oscillations of waves generated at 24 m/s wind speed, could result in requirement to perform a redesign of the tower or other component of the wind turbine.

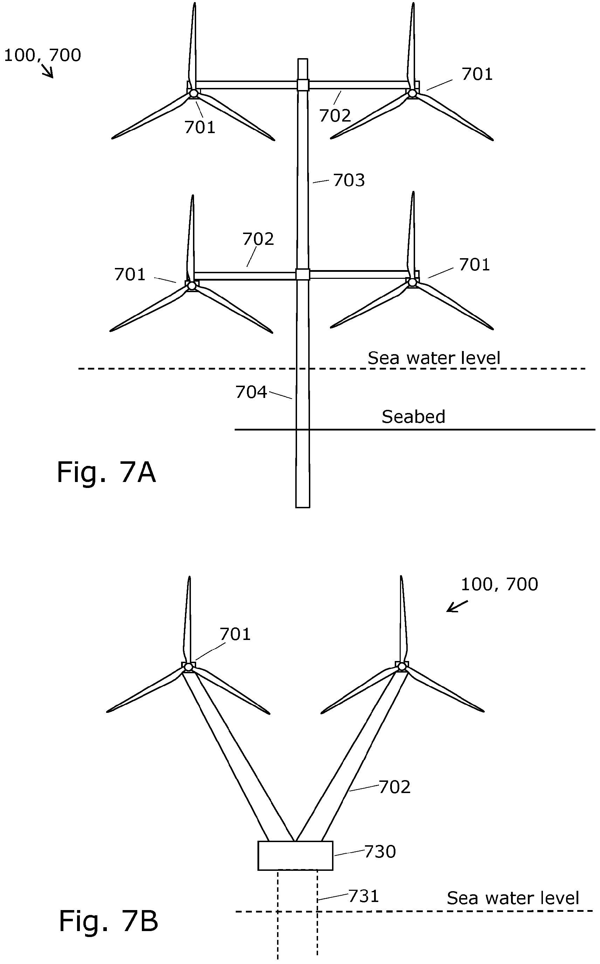

Fig. 7A shows alternative offshore wind turbines 100 in the form of a multi-rotor offshore wind turbines 700 which comprises a plurality of wind turbine modules 701 mounted to support arms 702 of a multi-rotor support structure 703. The multi-rotor support structure 703 may be configured in various ways. For example as illustrated, the multi-rotor support structure 703 may comprise a tower 704, which is equivalent to the tower 101 in Fig. 1, and support arms 702 extending outwardly from the tower 704 so that the wind turbine modules 701 are placed away from the tower 704 and on opposite sides of the tower 704.

Fig. 7B illustrates an alternative multi-rotor wind turbine 100 which does not comprise a common tower 704. Instead the support arms 702 extend from a foundation 730 so that two or more wind turbine modules 701 are sufficiently separated from each other at a given height or different heights. The foundation 730 may be connected with a monopile structure 731 or other support structure for fixing the wind turbine to the seabed.

Each of the wind turbine modules 701 comprises a rotor, a power generation system driven by the rotor and a rotor blade pitch adjustment system for pitching rotor blades.

Each of the plurality of wind turbines modules 701 may be mounted on an end-part of the support arms 702.

The support arms 702 may be excited to oscillate, e.g. as bending oscillations, as torsional oscillations around the longitudinal axis or in other ways due to wave loads. Multi-rotor wind turbines 700 may have support arms with low stiffness, e.g. enabled due to designs where the support arms 702 are supported by other structures, e.g. guy wire structures.

The support arms 702 and the support structure 731, as well as the tower 704 of the multi-rotor wind turbines are structurally equivalent with a tower and, therefore, can be designed according to the methods described for adjusting the structural design parameters of the tower.

Due to the low stiffness of the support arms 702 and the significant length of the tower 704 required in order to carry several levels of wind turbines modules 701, the low stiffness and/or long structures may further decrease eigenfrequencies of the offshore wind turbine and lead to low first order eigenfrequencies near the significant wave frequency fc. Increasing the stiffness of the structures to move eigenfrequencies above the 1P and 3P frequency ranges may not be feasible. Thus, an alternative design as described herein may solve the problem, i.e. a design where the structural design parameters of the tower or support structures 702, 704 are adjusted so that at least one of the dominant eigenfrequencies is located below the significant wave frequency fc in order to reduce the fatigue load of the structures.

Although the present invention has been described in connection with the specified embodiments, it should not be construed as being in any way limited to the presented examples. The scope of the present invention is defined by the appended claims.

## Claims

1. A method for structurally designing an offshore wind turbine comprising:
- obtaining (400) hydrodynamic data associated with a location of the offshore wind turbine, where the hydrodynamic data comprises wave height related values (Hi) and/or wave frequencies (fi) and probability of occurrence data (Pi) indicating the probability of waves with the wave height related values (Hi) and/or wave frequencies (fi),
- determining (501) a significant wave frequency (fc) based on the hydrodynamic data and on basis of a wave frequency where the wave height related value associated with the significant wave frequency has a determined potential or estimated significant impact on fatigue loading of a tower and/or a support structure of the wind turbine,
- determining dominant eigenfrequencies of the wind turbine,
- adjusting structural design parameters of the wind turbine so that at least one of the dominant eigenfrequencies is located below the significant wave frequency (fc).

2. A method according to claim 1, where determining (501) the significant wave frequency (fc) based on the hydrodynamic data comprises determining the significant wave frequency (fc) as the wave frequency (fi) having the highest probability of occurrence (Pi).

3. A method according to any of the preceding claims, wherein the at least one dominant eigenfrequency is associated with a structural eigenmode which is susceptible of resonant excitation due to waves with wave frequencies in a sub-critical and/or a super-critical frequency range, where the sub-critical wave frequency range comprises wave frequencies (fi) below the significant wave frequency (fc) and the super-critical wave frequency range comprises wave frequencies (fi) above the significant wave frequency (fc).

4. A method according to any of the preceding claims, wherein the dominant eigenfrequencies comprise at least first order eigenfrequencies.

5. A method according to any of the preceding claims, wherein the structural design parameters are adjusted so that the at least one of the dominant eigenfrequencies is additionally located below a 1P frequency range of the wind turbine.

6. A method according to any of the preceding claims, wherein the adjustment of the design parameters is performed subject to one or more constraints defining a frequency range constraint wherein location of eigenfrequencies are not allowed and/or defining a structural constraint.

7. A method according to any of the preceding claims, comprising
- estimating a fatigue load of the tower based on the structural design parameters and the hydrodynamic data, wherein the adjustment of the structural design parameters is performed based on the fatigue load and subject to a maximum fatigue load of the tower and/or subject to minimizing the fatigue load.

8. A method according to any of the preceding claims, comprising
- determining extreme loading due to low-probability waves having associated wave frequencies (fi) below the significant wave frequency (fc) in order to determine if the extreme loading due to the low-probability waves is acceptable.

9. A method according to any of the preceding claims, wherein the adjustment of the design parameters is performed so that eigenfrequencies of second order modes of the tower are located above the significant wave frequency (fc).

10. An offshore wind turbine (100) comprising a tower (101) and a nacelle (104) comprising a rotor (102) with two or more blades (103), wherein the wind turbine has at least one dominant eigenfrequency located below a significant wave frequency (fc), wherein:
- the significant wave frequency (fc) has been determined (501) from hydrodynamic data (400) associated with a location of the offshore wind turbine, where the hydrodynamic data comprises wave height related values (Hi)and/or wave frequencies (fi) and probability of occurrence data (Pi) indicating the probability of waves with the wave height related values (Hi) and/or wave frequencies (fi),
- the wave height related value associated with the significant wave frequency (fc) has a potential or estimated significant or maximal impact on fatigue loading of the tower and/or a support structure, and
- where structural design parameters of the wind turbine have been determined so that the at least one dominant eigenfrequency is located below the significant wave frequency (fc).

11. An offshore wind turbine according to claim 10, wherein the wind turbine has been designed according to the method of claim 1.

12. An offshore wind turbine according to any of claims 10-11, wherein the tower or extensions thereof extends to the seabed and is fixed to the seabed via a support structure.

13. An offshore wind turbine according to any of claims 10-12, wherein the support structure is a monopile structure.

14. An offshore wind turbine according to any of claims 10-13, wherein the wind turbine is a multi-rotor wind turbine comprising a plurality of the nacelles mounted to respective support arms (702) extending from the tower.

15. An offshore wind turbine according to any claims 10-14, wherein the at least one first order eigenfrequency is located below 0.15 Hz.

## Patentansprüche

1. Verfahren zum strukturellen Entwerfen einer ablandigen Windkraftanlage, umfassend:
- Erhalten (400) hydrodynamischer Daten, die einer Stelle der ablandigen Windkraftanlage zugeordnet sind, wobei die hydrodynamischen Daten auf Wellenhöhe bezogene Werte (Hi) und/oder Wellenfrequenzen (fi) und die Auftrittswahrscheinlichkeitsdaten (Pi) umfassen, die die Wahrscheinlichkeit von Wellen mit den auf Wellenhöhe bezogenen Werten (Hi) und/oder Wellenfrequenzen (fi) anzeigen,
- Bestimmen (501) einer signifikanten Wellenfrequenz (fc) basierend auf den hydrodynamischen Daten und auf Basis einer Wellenfrequenz, wo der auf Wellenhöhe bezogene Wert, der der signifikanten Wellenfrequenz zugeordnet ist, eine bestimmte potenzielle oder geschätzte signifikante Auswirkung auf die Dauerbeanspruchung eines Turms und/oder einer Trägerstruktur der Windkraftanlage aufweist,
- Bestimmen dominanter Eigenfrequenzen der Windkraftanlage,
- Anpassen struktureller Entwurfsparameter der Windkraftanlage, sodass mindestens eine der dominanten Eigenfrequenzen unterhalb der signifikanten Wellenfrequenz (fc) liegt.

2. Verfahren nach Anspruch 1, wobei das Bestimmen (501) der signifikanten Wellenfrequenz (fc) basierend auf den hydrodynamischen Daten das Bestimmen der signifikanten Wellenfrequenz (fc) als die Wellenfrequenz (fi) umfasst, die die höchste Auftrittswahrscheinlichkeit (Pi) aufweist.

3. Verfahren nach einem der vorstehenden Ansprüche, wobei die mindestens eine dominante Eigenfrequenz einer strukturellen Eigenschwingung zugeordnet ist, die empfänglich für resonante Anregung aufgrund von Wellen mit Wellenfrequenzen in einem subkritischen und/oder einem superkritischen Frequenzbereich ist, wobei der subkritische Wellenfrequenzbereich Wellenfrequenzen (fi) unter der signifikanten Wellenfrequenz (fc) umfasst, und der superkritische Wellenfrequenzbereich Wellenfrequenzen (fi) über der signifikanten Wellenfrequenz (fc) umfasst.

4. Verfahren nach einem der vorstehenden Ansprüche, wobei die dominanten Eigenfrequenzen mindestens Eigenfrequenzen erster Ordnung umfassen.

5. Verfahren nach einem der vorstehenden Ansprüche, wobei die strukturellen Entwurfsparameter angepasst sind, sodass mindestens eine der dominanten Eigenfrequenzen zusätzlich unter einem 1P Frequenzbereich der Windkraftanlage liegt.

6. Verfahren nach einem der vorstehenden Ansprüche, wobei die Anpassung der Entwurfsparameter einer oder mehrerer Einschränkungen ausgesetzt ausgeführt wird, die eine Frequenzbereichseinschränkung definieren, bei der eine Stelle von Eigenfrequenzen nicht erlaubt sind und/oder eine strukturelle Einschränkung definieren.

7. Verfahren nach einem der vorstehenden Ansprüche, umfassend
- das Schätzen einer Ermüdungsbelastung des Turms basierend auf den strukturellen Entwurfsparametern und den hydrodynamischen Daten, wobei die Anpassung der strukturellen Entwurfsparameter basierend auf der Ermüdungsbelastung ausgeführt wird, und einer maximalen Ermüdungsbelastung des Turms ausgesetzt ist und/oder dem Minimieren der Ermüdungsbelastung ausgesetzt ist.

8. Verfahren nach einem der vorstehenden Ansprüche, umfassend
- Bestimmen extremer Belastung aufgrund von Wellen mit niedriger Wahrscheinlichkeit, die zugeordnete Wellenfrequenzen (fi) unter der signifikanten Wellenfrequenz (fc) aufweisen, um zu bestimmen, ob die extreme Belastung aufgrund der Wellen mit niedriger Wahrscheinlichkeit annehmbar ist.

9. Verfahren nach einem der vorstehenden Ansprüche, wobei das Anpassen der Entwurfsparameter durchgeführt wird, sodass Modi von Eigenfrequenzen zweiter Ordnung des Turms über der signifikanten Wellenfrequenz (fc) liegen.

10. Ablandige Windkraftanlage (100), umfassend einen Turm (101) und eine Gondel (104), umfassend einen Rotor (102) mit zwei oder mehr Blättern (103), wobei die Windkraftanlage mindestens eine dominante Eigenfrequenz aufweist, die unter einer signifikanten Wellenfrequenz (fc) liegt, wobei:
- die signifikante Wellenfrequenz (fc) aus hydrodynamischen Daten (400) bestimmt (501) worden ist, die einer Stelle der ablandigen Windkraftanlage zugeordnet ist, wo die hydrodynamischen Daten auf Wellenhöhe bezogene Werte (Hi) und/oder Wellenfrequenzen (fi) und Auftrittswahrscheinlichkeitsdaten (Pi) umfassen, die die Wahrscheinlichkeit von Wellen mit auf Wellenhöhe bezogenen Werten (Hi) und/oder Wellenfrequenzen (fi) anzeigen,
- der auf Wellenhöhe bezogene Wert, der der signifikanten Wellenfrequenz (fc) zugeordnet ist, eine bestimmte potenzielle oder geschätzte signifikante oder maximale Auswirkung auf die Dauerbeanspruchung des Turms und/oder einer Trägerstruktur aufweist, und
- wo strukturelle Entwurfsparameter der Windkraftanlage bestimmt worden sind, sodass die mindestens eine dominante Eigenfrequenz unter der signifikanten Wellenfrequenz (fc) liegt.

11. Ablandige Windkraftanlage nach Anspruch 10, wobei die Windkraftanlage nach dem Verfahren nach Anspruch 1 entworfen worden ist.

12. Ablandige Windkraftanlage nach einem der Ansprüche 10-11, wobei sich der Turm oder Erweiterungen davon zum Meeresgrund erstrecken und über eine Trägerstruktur am Meeresgrund befestigt sind.

13. Ablandige Windkraftanlage nach einem der Ansprüche 10-12, wobei die Trägerstruktur eine Monopilestruktur ist.

14. Ablandige Windkraftanlage nach einem der Ansprüche 10-13, wobei die Windkraftanlage eine Windkraftanlage mit mehreren Rotoren ist, die eine Vielzahl von Gondeln umfasst, die an jeweiligen Trägerarmen (702) montiert sind, die sich aus dem Turm erstrecken.

15. Ablandige Windkraftanlage nach einem der Ansprüche 10-14, wobei die mindestens eine Eigenfrequenz erster Ordnung unter 0,15 Hz liegt.

## Revendications

1. Procédé pour concevoir structurellement une éolienne en mer comprenant :
- l'obtention (400) de données hydrodynamiques associées à un emplacement de l'éolienne en mer, où les données hydrodynamiques comprenant des valeurs liées à la hauteur des vagues (Hi) et/ou des données de probabilité d'occurrence (Pi) et de fréquence des vagues (fi) indiquant la probabilité des vagues avec les valeurs liées à la hauteur des vagues (Hi) et/ou aux fréquences de vagues (fi),
- la détermination (501) d'une fréquence de vague significative (fc) en fonction des données hydrodynamiques et en fonction d'une fréquence de vague où la valeur liée à la hauteur des vagues associée avec la fréquence de vagues significative présente un impact significatif estimé ou potentiel déterminé sur la charge de fatigue d'une tour et/ou une structure de support de l'éolienne,
- la détermination de fréquences propres dominantes de l'éolienne,
- l'ajustement de paramètres de conception structurels de l'éolienne de sorte à ce qu'au moins une des fréquences propres dominantes est située en dessous de la fréquence de vagues significative (fc).

2. Procédé selon la revendication 1, où la détermination (501) de la fréquence de vagues significative (fc) en fonction des données hydrodynamiques comprend la détermination de la fréquence de vagues significative (fc) en tant que la fréquence de vagues (fi) présentant la probabilité d'occurrence la plus élevée (Pi).

3. Procédé selon l'une quelconque des revendications précédentes, dans lequel la au moins une fréquence propre dominante est associée à un mode propre structurel qui est susceptible d'une excitation résonnante^{∗∗∗} due aux vagues avec des fréquences de vagues dans une plage de fréquences super critiques et/ou sous-critiques, où la plage de fréquences de vagues sous-critique comprend des fréquences de vagues (fi) en dessous de la fréquence de vagues significative (fc) et la plage de fréquences de vagues super critiques comprend des fréquences de vague (fi) au-dessus de la fréquence de vagues significative (fc).

4. Procédé selon l'une quelconque des revendications précédentes, dans lequel les fréquences propres dominantes comprennent au moins des fréquences propres de premier ordre.

5. Procédé selon l'une quelconque des revendications précédentes, dans lequel les paramètres de conception structurels sont ajustés de sorte que la au moins une des fréquences propres dominantes est située en outre sous une plage de fréquences 1P de l'éolienne.

6. Procédé selon l'une quelconque des revendications précédentes, dans lequel l'ajustement des paramètres de conception est réalisé en fonction d'une ou plusieurs contraintes définissant une contrainte de plage de fréquences dans laquelle l'emplacement des fréquences propres n'est pas autorisé et/ou définissant une contrainte structurelle.

7. Procédé selon l'une quelconque des revendications précédentes, comprenant
- l'estimation d'une charge de fatigue de la tour en fonction des paramètres de conception structurels et des données hydrodynamiques, dans lequel l'ajustement des paramètres de conception structurels est réalisé en fonction de la charge de fatigue et soumis à une charge de fatigue maximale de la tour et/ou soumis à la minimisation de la charge de fatigue.

8. Procédé selon l'une quelconque des revendications précédentes, comprenant
- la détermination d'une charge extrême due à des vagues de faible probabilité présentant des fréquences de vagues (fi) associés sous la fréquence de vagues significative (fc) afin de déterminer si la charge extrême due aux vagues de faible probabilité est acceptable.

9. Procédé selon l'une quelconque des revendications précédentes, dans lequel l'ajustement des paramètres de conception est réalisé de sorte que les fréquences propres de seconds modes d'ordre de la tour sont situées au-dessus de la fréquence de vagues significative (fc).

10. Éolienne en mer (100) comprenant une tour (101) et une nacelle (104) comprenant un rotor (102) avec deux pales ou plus (103), dans laquelle l'éolienne présente au moins une fréquence propre dominante située en dessous d'une fréquence de vagues significative (fc), dans laquelle :
- la fréquence de vagues significative (fc) a été déterminée (501) à partir de données hydrodynamiques (400) associées à un emplacement de l'éolienne en mer, où les données hydrodynamiques comprennent des valeurs liées à la hauteur des vagues (Hi) et/ou des fréquences de vagues (fi) et des données de probabilité d'occurrences (Pi) indiquant la probabilité des vagues avec les valeurs liées à la hauteur des vagues (Hi) et/ou des fréquences de vagues (fi),
- les valeurs liées à la hauteur des vagues associées à la fréquence de vagues significative (fc) présente un impact maximal ou significatif estimé ou potentiel sur la charge de fatigue de la tour et/ou une structure de support, et
- où les paramètres de conceptions structurels de l'éolienne ont été déterminés de sorte que la au moins une fréquence propre dominante est située en dessous de la fréquence de vagues significative (fc).

11. Eolienne en mer selon la revendication 10, dans laquelle l'éolienne a été conçue selon le procédé de la revendication 1.

12. Eolienne en mer selon l'une quelconque des revendications 10-11, dans laquelle la tour ou des extensions de celui-ci s'étendent sur le fond marin et sont fixés au fond marin via une structure de support.

13. Eolienne en mer selon l'une quelconque des revendications 10-12, dans laquelle la structure de support est une structure monopieu.

14. Eolienne en mer selon l'une quelconque des revendications 10-13, dans laquelle l'éolienne est une éolienne à rotors multiples comprenant une pluralité de nacelles montées sur des bras de support respectifs (702) s'étendant de la tour.

15. Eolienne en mer selon l'une quelconque des revendications 10-14, dans laquelle la au moins une fréquence propre de premier ordre est située en dessous de 0,15 Hz.
